# FASCICULE DE BREVET EUROPEEN

(11) **EP 2 113 799 B1**
(45) Date de publication et mention de la délivrance du brevet: **21.11.2012**
(21) Numéro de dépôt: 09305362.7
(22) Date de dépôt: 28.04.2009
(51) Int. Cl.: G02B 6/44

(54) **Boîtier de connexion pour terminaisons de câbles à fibre optique**
Anschlussdose zur Verbindung von Lichtwellenleiterkabeln
Junction box for terminations of optical fiber cables

(30) Priorité: 28.04.2008 FR 0802364
(43) Date de publication de la demande: 04.11.2009
(73) Titulaire: IDEA OPTICAL, 22300 Lannion (FR)
(72) Inventeur: Kerboul, Michel, 4600, SAINT NAZAIRE (FR)
(74) Mandataire: Laget, Jean-Loup

(56) Documents cités:
- EP-A- 0 657 757
- US-A- 5 067 784
- US-A- 5 339 379
- US-A1- 2002 150 372
- US-A1- 2005 111 809
- US-A1- 2007 031 099
- US-A1- 2007 127 201
- US-A1- 2008 050 083
- US-B1- 6 526 210

## Description

La présente invention concerne de manière générale les boîtiers de connexion pour terminaisons de câbles à fibre optique.

L'invention concerne plus particulièrement un boîtier de connexion pour terminaisons de câbles à fibre optique à raccorder à l'aide de raccords réalisés chacun sous forme d'un corps allongé comportant deux parties d'extrémité opposées aptes à recevoir chacune une fiche de connexion de terminaison de câble à fibre optique et, disposée entre lesdites parties d'extrémité, au moins une saillie, dite principale, telle qu'un épaulement, un bourrelet ou un renflement, s'étendant transversalement à la direction longitudinale du raccord. Ledit boîtier comporte une base fermée au moins partiellement par un capot, et, logé entre la base et le capot, un cadre rectangulaire appelé bandeau de connexion, reposant, à l'état dressé, par sa traverse inférieure sur le fond de la base, ledit bandeau délimitant une ouverture pour l'insertion de chacun des raccords jusqu'à une position d'appui de ladite saillie principale du raccord contre la traverse supérieure dudit bandeau.

Les réseaux de télécommunication utilisant des câbles à fibre optique se développent de manière très importante. Il est ainsi nécessaire de prévoir un grand nombre de raccords pour assurer la connexion entre les câbles à fibre optique reliés aux équipements émetteurs et les câbles à fibre optique reliés aux équipements récepteurs. Les raccords entre les câbles à fibre optique se font à l'aide de boîtiers de connexion tels que décrits ci-dessus. Du fait du nombre important de câbles à fibre optique et donc de raccords à réaliser, les boîtiers de connexion sont empilés les uns sur les autres dans des armoires. Le nombre de boîtiers devient très vite important et il devient vite nécessaire de multiplier le nombre d'armoires. Le coût lié à l'encombrement des boîtiers de connexion est très important. Il est donc souhaitable aujourd'hui de diminuer le plus possible la hauteur de chaque boîtier de connexion.

Dans les boîtiers de l'état de la technique, les raccords introduits dans le bandeau de connexion sont fixés audit bandeau par vissage sur la traverse supérieure du bandeau. A cet effet, la saillie principale formant butée d'introduction d'un raccord dans le bandeau présente une hauteur importante pour former une oreille servant de support de tête de vis. La vis sert à assurer le maintien de chaque raccord dans ledit bandeau. En effet, un tel moyen de fixation du raccord au bandeau empêche, lorsqu'un opérateur tire sur une fiche, l'extraction du raccord par rapport au bandeau. En outre, par exemple si l'opérateur donne par inadvertance un coup dans le boîtier, le vissage du raccord sur le bandeau empêche ledit raccord de s'enfoncer à travers l'ouverture du bandeau et de sortir de l'autre côté du bandeau. Chaque raccord comportant le plus souvent, du côté du raccord opposé à la saillie principale par rapport au bandeau, une patte d'encliquetage élastique permettant l'introduction par encliquetage du raccord dans le bandeau, il peut paraître inutile d'ajouter des moyens de fixation de chaque raccord au bandeau.
Cependant, il s'avère que lorsque le boîtier reçoit un coup ou lorsque l'opérateur tire sur une fiche, le bandeau peut être déformé et ainsi laisser sortir le raccord de l'ouverture du bandeau. Une telle fixation par vissage assure un maintien fiable des raccords dans le bandeau.

Cependant, l'oreille de chaque raccord servant de support de vissage génère un encombrement en hauteur du boîtier très important. Comme expliqué ci-dessus, un tel encombrement limite le nombre de boîtiers que l'on peut empiler dans une même armoire, ce qui nécessite d'augmenter le nombre d'armoires, et donc les coûts associés à un tel encombrement.

Les documents US 2008/050083, US-5.067.784, US-2005/111809 et EP-0.657.757 illustrent l'état de la technique.

Le but de l'invention est de réduire l'encombrement en hauteur de chaque boîtier de connexion en assurant un maintien fiable des raccords dans ledit bandeau.

Un autre but de la présente invention est d'assurer le maintien des raccords dans le bandeau de manière aisée et rapide pour l'opérateur.

Un autre but de l'invention est également de permettre à l'opérateur, lorsque celui-ci souhaite enlever un raccord du bandeau, de pouvoir réaliser cette opération de manière aisée sans avoir à dévisser ledit raccord.

Un autre but de l'invention est de limiter le nombre de pièces nécessaires au maintien des raccords dans le bandeau.

Un autre but de l'invention est d'augmenter la rigidité du bandeau à l'état fermé du boîtier.

Un autre but de l'invention est de permettre un montage aisé de l'ensemble formé par le bandeau et les raccords introduits dans ledit bandeau, à l'intérieur du boîtier de connexion.

A cet effet, l'invention concerne un boîtier de connexion pour terminaisons de câbles à fibre optique à raccorder à l'aide de raccords réalisés chacun sous forme d'un corps allongé comportant deux parties d'extrémité opposées aptes à recevoir chacune une fiche de connexion de terminaison de câble à fibre optique et, disposée entre lesdites parties d'extrémité, une saillie, dite principale, telle qu'un épaulement, un bourrelet ou un renflement, s'étendant transversalement à la direction longitudinale du raccord, ledit boîtier comportant une base fermée au moins partiellement par un capot, et, logé entre la base et le capot, un cadre rectangulaire appelé bandeau de connexion, reposant, à l'état dressé, par sa traverse inférieure sur le fond de la base, ledit bandeau délimitant une ouverture pour l'insertion de chacun des raccords jusqu'à une position d'appui de ladite saillie principale du raccord contre la traverse supérieure dudit bandeau,
**caractérisé en ce que** le capot du boîtier comporte une partie apte à former une butée de retenue de chaque raccord, ladite butée de retenue s'étendant, à l'état fermé du boîtier, sensiblement parallèlement à la traverse supérieure du bandeau, la butée de retenue et la traverse supérieure du bandeau délimitant entre elles un logement à l'intérieur duquel est apte à s'insérer la saillie principale de chaque raccord, à l'état introduit de chaque raccord dans l'ouverture du bandeau, en vue du maintien de chaque raccord dans le bandeau.

Autrement dit, la partie du capot formant butée de retenue est écartée du bandeau de telle sorte que ladite butée de retenue délimite avec la traverse supérieure du bandeau un logement d'insertion de la saillie principale du raccord.

Ainsi, ladite saillie principale de chaque raccord est prise en sandwich entre ledit bandeau et ladite butée de retenue du capot, ce qui assure un maintien fiable des raccords dans ledit bandeau. En effet, la butée de retenue située en regard de la saillie principale de chaque raccord s'oppose à une extraction des raccords par rapport au bandeau. Ladite saillie principale n'a pas besoin d'être de hauteur importante pour être retenue par la butée du capot contrairement aux oreilles des raccords de l'état de la technique qui doivent être de hauteur importante pour servir de support de tête de vis. Ainsi grâce au capot du boîtier selon l'invention, il est possible d'utiliser des raccords pour chacun desquels la saillie principale, servant à limiter l'introduction dudit raccord dans le bandeau, est de faible encombrement. Le boîtier selon l'invention est ainsi de hauteur réduite comparée à celle des boîtiers accueillant des raccords avec oreilles servant de support de vissage. Il est donc possible d'augmenter le nombre de boîtiers que l'on peut empiler dans une même armoire et ainsi réduire l'encombrement et les coûts associés.

En outre, une telle conception du boîtier de connexion ne nécessite pas de pièces supplémentaires telles que lesdites vis utilisées dans l'état de la technique. Les manipulations sont également simplifiées pour l'opérateur puisqu'il lui suffit de remettre en place le capot sur la base afin de positionner la partie du capot formant butée de retenue en regard de chaque saillie principale d'un raccord, pour former, en coopération avec la traverse supérieure du bandeau, un logement d'insertion pour chaque saillie principale d'un raccord. Le risque d'extraction intempestive des raccords par rapport au bandeau est ainsi limité. De même, lorsque l'opérateur souhaite enlever un raccord du bandeau et dans le cas où ledit raccord comporte une telle patte élastique permettant un montage par encliquetage du raccord dans le bandeau, il suffit à l'opérateur de retirer le capot et d'extraire le raccord, en pinçant éventuellement la patte élastique associée au raccord. L'opération de remplacement d'un raccord peut ainsi être réalisée de manière aisée sans avoir à dévisser ledit raccord du bandeau.

Selon une caractéristique avantageuse de l'invention, ladite butée de retenue est formée par une partie en saillie de la face intérieure du capot. Avantageusement, ladite partie en saillie de la face intérieure du capot est formée par un bord du capot replié sur lui-même, le capot étant de préférence en métal. Une telle butée de retenue est aisée à réaliser.

Selon une caractéristique avantageuse de l'invention, le capot comporte également une fente, dans laquelle, à l'état fermé du boîtier, la traverse supérieure du bandeau est partiellement engagée, les bords longitudinaux opposés de la fente formant des butées de maintien dudit bandeau pour limiter sa déformation lors d'un effort sur ledit bandeau selon la direction transversale au plan d'ouverture dudit bandeau.

Une telle fente permet de prendre en sandwich la traverse supérieure du bandeau, ce qui confère audit bandeau une rigidité l'empêchant de se déformer lorsqu'un effort exercé sur ledit raccord, dans le sens d'introduction dudit raccord, provoque un appui de la saillie principale du raccord sur la traverse supérieure. Une telle fente augmente ainsi la fiabilité du maintien des raccords dans le bandeau, notamment lorsque le boîtier est soumis à un choc.

Selon une variante de réalisation de l'invention, le capot comporte une fente dans laquelle est au moins partiellement engagée la traverse supérieure du bandeau, un bord longitudinal de la fente formant ladite butée de retenue de chaque raccord et l'autre bord longitudinal de la fente formant butée pour la traverse supérieure du bandeau, de manière à permettre une prise en sandwich, entre les deux bords longitudinaux de la fente, de l'ensemble formé par la traverse supérieure du bandeau et la saillie principale de chaque raccord.

Une telle fente permet de réaliser de manière aisée, d'une part, la butée de retenue de la saillie principale de chaque raccord, dans le sens d'une extraction dudit raccord, et, d'autre part, une butée de retenue de la traverse supérieure du bandeau dans le sens d'introduction du raccord dans le bandeau, ce qui permet de rigidifier le bandeau. Une telle caractéristique permet d'optimiser la réduction de hauteur du boîtier de connexion.

Selon un mode de réalisation particulier de l'invention, le boîtier de connexion est destiné à loger des raccords de connexion dont chacun des corps allongés comporte en plus de ladite saillie principale, une saillie auxiliaire s'étendant transversalement à la direction longitudinale du raccord, ledit bandeau délimitant une ouverture pour l'insertion de chacun des raccords jusqu'à une position d'appui à la fois de la saillie principale du raccord contre la traverse supérieure dudit bandeau et de la saillie auxiliaire contre la traverse inférieure du bandeau. La base comporte alors une partie apte à former une butée de retenue de chaque raccord, ladite butée de retenue s'étendant, à l'état fermé du boîtier, sensiblement parallèlement à la traverse inférieure du bandeau, la butée de retenue de la base et la traverse inférieure du bandeau délimitant entre elles un logement à l'intérieur duquel est apte à s'insérer la saillie auxiliaire de chaque raccord, à l'état introduit de chaque raccord dans l'ouverture du bandeau, en vue du maintien de chaque raccord dans le bandeau.

Une telle butée de retenue des raccords associée à la base et coopérant avec la saillie auxiliaire de chaque raccord favorise encore le maintien des raccords dans le bandeau.

Selon une caractéristique avantageuse de l'invention dudit mode de réalisation particulier, ladite butée de retenue de la base est formée par une partie en saillie de la face de la base formant fond du boîtier, ladite partie en saillie étant rapportée ou formée d'une pièce avec la base.

Selon une caractéristique avantageuse de l'invention, le bandeau est réalisé d'une pièce avec la face de la base formant fond du boîtier.

Selon une caractéristique avantageuse de l'invention, le bandeau étant amovible, la base comporte également une fente, dans laquelle, à l'état dressé du bandeau, la traverse inférieure du bandeau est partiellement engagée, les bords longitudinaux opposés de la fente formant des butées de maintien dudit bandeau pour limiter sa déformation lors d'un effort sur ledit bandeau selon la direction transversale au plan d'ouverture dudit bandeau.

La réalisation d'un bandeau amovible permet une manipulation aisée dudit bandeau et facilite notamment le montage de la rangée de raccords dans ledit bandeau. Une fois les raccords introduits dans le bandeau, il suffit d'introduire la traverse inférieure du bandeau dans la fente de la base puis de refermer le capot dont la fente, lorsqu'elle est prévue, vient prendre en sandwich la traverse supérieure du bandeau et dont la butée de retenue maintien en coopération avec la traverse supérieure du bandeau chaque raccord dans ledit bandeau.

Selon une caractéristique avantageuse de l'invention, l'ouverture du bandeau est formée d'une pluralité de fenêtres distinctes délimitant chacune le logement d'un raccord. La présence d'une pluralité de fenêtres favorise la rigidification du bandeau.

L'invention sera bien comprise à la lecture de la description suivante d'exemples de réalisation, en référence aux dessins annexés dans lesquels :
- la figure 1 est une vue en perspective du boîtier selon l'invention, à l'état fermé du boîtier et à l'état introduit des raccords dans le bandeau de connexion ;
- la figure 1A est une vue en perspective selon un autre angle du boîtier de la figure 1 ;
- la figure 2 est une vue éclatée du boîtier de la figure 1 ;
- la figure 3 est une vue du boîtier de la figure 1 en l'absence des raccords ;
- la figure 4 est une vue de dessus du boîtier de la figure 1 ;
- la figure 5 est une vue selon la coupe A-A du boîtier de la figure 4 ;
- la figure 6 est une vue de détail de la zone VI de la figure 5.

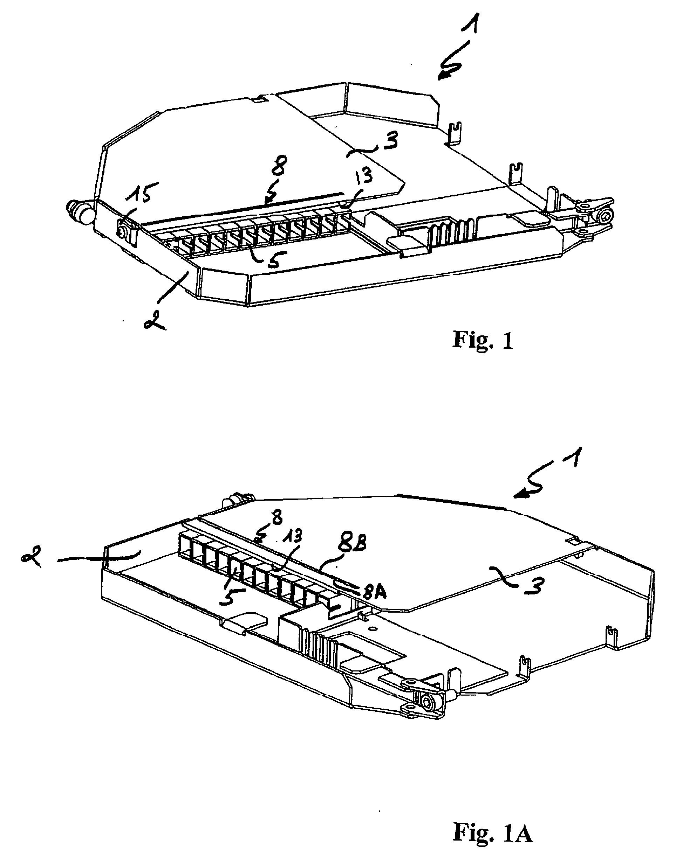

A la figure 1, on a représenté un boîtier 1 de connexion pour terminaisons de câbles à fibre optique à raccorder à l'aide de raccords 5. Chaque raccord 5 est réalisé sous forme d'un corps allongé comportant deux parties 6A, 6B d'extrémité, opposées, aptes à recevoir chacune une fiche de connexion de terminaison de câble à fibre optique. Chaque raccord reçoit ainsi à une de ses extrémités, une fiche de connexion d'une terminaison d'un câble à fibre optique relié à un émetteur, tel qu'un laser ou un équipement à photodiode, et à l'autre extrémité, une fiche de connexion d'une terminaison de câble à fibres optique reliée à un équipement récepteur, tel qu'un réseau de télécommunication. L'ensemble formé par un raccord et les deux fiches de connexion associées est appelé connecteur.

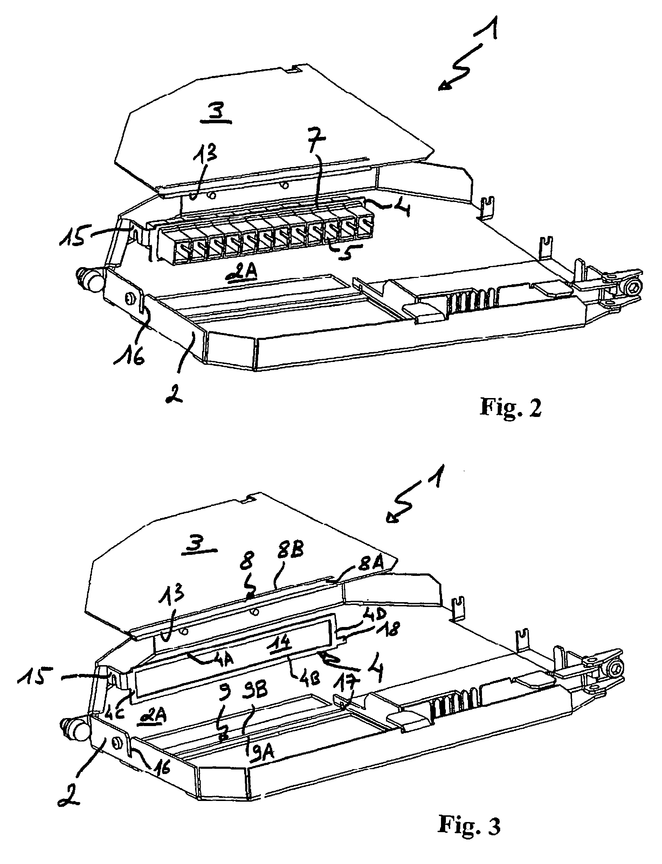

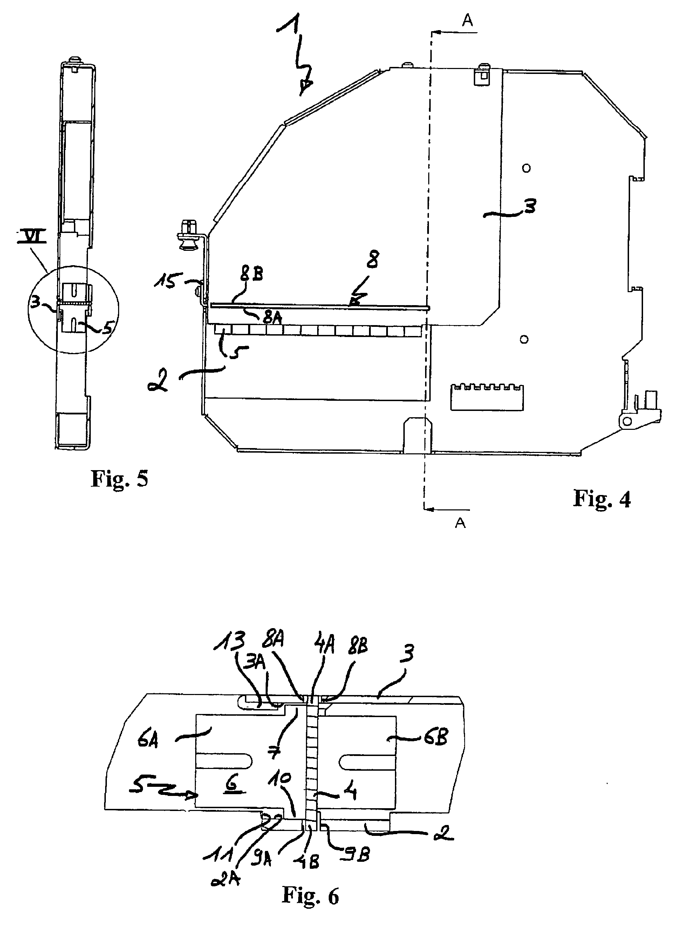

Comme illustré aux figures 2 et 6, chaque raccord 5 comporte également, disposée entre lesdites parties 6A, 6B d'extrémité, une saillie principale 7, telle qu'un épaulement, un bourrelet ou un renflement, s'étendant transversalement à la direction longitudinale du raccord 5. Ladite saillie principale 7 est de dimension connue.

Ledit boîtier 1 comporte une base 2 formée d'une paroi de fond 2A et de parois latérales. Ladite base est fermée au moins partiellement par un capot 3. Le boîtier comporte également, logé entre la base 2 et le capot 3, un cadre 4 rectangulaire appelé bandeau de connexion. Ledit bandeau comporte une traverse supérieure 4A voisine du capot et une traverse inférieure 4B voisine de la base, traverses supérieure et inférieure étant reliées entre elles par deux montants 4C, 4D. Ledit bandeau 4 repose à l'état dressé, par sa traverse inférieure 4B sur le fond de la base 2. Ledit bandeau 4 délimite une ouverture 14 pour l'insertion de chacun des raccords 5 jusqu'à une position d'appui de ladite saillie principale 7 du raccord 5 contre la traverse supérieure 4A dudit bandeau. Ainsi, le bandeau 4 loge selon sa longueur, c'est-à-dire le long de ses traverses inférieure et supérieure, une rangée de raccords 5 de connexion.

De préférence, la portion du corps 6 de chaque raccord 5 située du côté opposé à la saillie principale 7 par rapport au bandeau est pourvue d'une patte élastiquement déformable (non représentée) située en regard de ladite saillie principale 7 pour le montage par encliquetage de chaque raccord 5 dans le bandeau.

De manière caractéristique à l'invention, le capot 3 du boîtier 1 comporte une partie formant une butée 13 de retenue de chaque raccord 5. Ladite butée 13 de retenue s'étend, à l'état fermé du boîtier 1, sensiblement parallèlement à la traverse supérieure 4A du bandeau 4. La butée 13 de retenue et la traverse supérieure 4A du bandeau 4 délimitent entre elles un logement à l'intérieur duquel s'insère la saillie principale 7 de chaque raccord 5, à l'état introduit de chaque raccord 5 dans l'ouverture 14 du bandeau 4, en vue du maintien de chaque raccord 5 dans le bandeau 4.

Dans l'exemple illustré aux figures, ladite butée 13 de retenue est formée par une partie en saillie de la face intérieure 3A du capot 3, c'est-à-dire la face du capot 3 tournée vers le fond de la base 2. En particulier, ladite partie en saillie de la face intérieure 3A du capot 3 est formée par un bord du capot 3 replié sur lui-même, le capot étant de préférence en métal. En variante, la partie en saillie peut être formée par une pièce rapportée, telle qu'une lame.

Avantageusement, le capot 3 comporte également une fente 8, dite de rigidification du haut du bandeau, dans laquelle, à l'état fermé du boîtier 1, la traverse supérieure 4A du bandeau 4 est partiellement engagée. Comme illustré aux figures 5 et 6, les bords longitudinaux 8A, 8B opposés de la fente 8 forment des butées de maintien dudit bandeau 4 pour limiter sa déformation lors d'un effort sur ledit bandeau 4 selon la direction transversale au plan d'ouverture 14 dudit bandeau 4, c'est-à-dire selon le sens d'introduction et d'extraction des raccords par rapport au bandeau. En effet, les bords longitudinaux 8A, 8B, entre lesquels est prise en sandwich la traverse supérieure du bandeau, confèrent une certaine rigidité audit bandeau.

Dans l'exemple illustré aux figures, chaque raccord 5 de connexion comporte en plus de ladite saillie principale 7, une saillie auxiliaire 10 s'étendant transversalement à la direction longitudinale du raccord 5. Ladite saillie auxiliaire 10 est également de dimension connue. Ledit bandeau 4 délimite ainsi une ouverture 14 d'insertion de chacun des raccords 5 jusqu'à une position d'appui à la fois de la saillie principale 7 du raccord 5 contre la traverse supérieure 4A dudit bandeau et de la saillie auxiliaire 10 contre la traverse inférieure 4B du bandeau 4.

La base 2 comporte une partie formant une butée 11 de retenue de chaque raccord 5, s'étendant sensiblement parallèlement à la traverse inférieure 4B du bandeau 4. La butée 11 de retenue et la traverse inférieure 4B du bandeau 4 délimitent entre elles un logement à l'intérieur duquel s'insère la saillie auxiliaire 10 de chaque raccord 5 introduit dans l'ouverture 14 du bandeau 4, en vue du maintien de chaque raccord 5 dans le bandeau 4.

Dans l'exemple illustré aux figures, ladite butée 11 de retenue de la base est formée par une partie 11 en saillie de la face 2A de la base 2 formant fond du boîtier 1. Ladite partie 11 en saillie peut être rapportée ou formée d'une pièce avec la base 2.

De préférence, ladite portion du corps du raccord comporte deux pattes d'encliquetage (non représentées), la première située en regard du capot et la deuxième en regard de la base. Autrement dit, la première patte est située en regard de la saillie principale 7 et la deuxième patte est située en regard de la saillie auxiliaire 10. Le raccord est introduit dans le bandeau par sa partie de corps munie des pattes d'encliquetage. Lesdites pattes s'effacent par déformation élastique au passage des traverses du bandeau et se redressent une fois le bandeau passé pour empêcher le retrait du raccord.

Comme illustré aux figures, le bandeau 4 est conçu de manière à être amovible. La base 2 comporte une fente 9, dite de rigidification du bas du bandeau, dans laquelle, à l'état dressé du bandeau, la traverse inférieure 4B du bandeau 4 est partiellement engagée. Les bords 9A, 9B longitudinaux opposés de la fente 9 forment des butées de maintien dudit bandeau 4 pour limiter sa déformation lors d'un effort sur ledit bandeau 4 selon la direction transversale au plan d'ouverture 14 dudit bandeau 4.

Il est prévu des moyens d'immobilisation du bandeau 4 à l'intérieur dudit boîtier autres que lesdites fentes 8 et 9. Tels qu'illustrés à la figure 3, ces moyens sont formés d'une languette 18 prenant naissance sur le montant 4D du bandeau situé du côté du centre du boîtier, ladite languette 18 s'engageant dans un orifice d'accueil 17 d'une paroi solidaire de la base 2. Lesdits moyens de maintien sont également formés par une encoche 16 ménagée dans une paroi latérale de la base 2 pour recevoir l'autre montant 4C dudit bandeau 4. Il est également prévu une languette 15 pliée prenant naissance sur ledit autre montant 4C qui s'étend, grâce à ladite encoche 16, hors dudit boîtier pour être solidarisée par vissage à la paroi latérale de la base 2.

L'ouverture 14 d'insertion des raccords 5 délimitée par le bandeau peut être compartimentée ou non. Ainsi, selon un mode de réalisation non illustré, on peut prévoir que l'ouverture 14 du bandeau 4 soit formée d'une pluralité de fenêtres distinctes délimitant chacune le logement d'un raccord 5.

Selon une variante de réalisation de l'invention non illustrée aux figures, on peut prévoir que la butée de retenue de la saillie principale de chaque raccord soit formée, non pas par un bourrelet situé sur la face intérieure du capot comme dans l'exemple illustré aux figures, mais par le bord d'une fente ménagée dans le capot. A cet effet le capot 3 comporte une fente dans laquelle est au moins partiellement engagée la traverse supérieure 4A du bandeau, un bord longitudinal de la fente formant ladite butée de retenue de chaque raccord 5 et l'autre bord longitudinal de la fente formant butée pour la traverse supérieure 4A du bandeau 4, de manière à permettre une prise en sandwich, entre les deux bords longitudinaux de la fente, de l'ensemble formé par la traverse supérieure 4A du bandeau 4 et la saillie principale 7 de chaque raccord 5.

Dans l'exemple illustré aux figures, le bandeau de connexion est amovible. En variante, le bandeau 4 peut être réalisé d'une pièce avec la face de la base 2 formant fond du boîtier 1. Dans ce cas, il n'est pas nécessaire de prévoir une fente telle que celle référencée en 8 aux figures, prenant en sandwich la traverse supérieure du bandeau. En effet, la réalisation du bandeau d'une seule pièce avec la base lui confère une rigidité suffisante pour limiter sa déformation lors d'un effort selon le sens d'introduction ou d'extraction des raccords 5. La partie en saillie de la face intérieure du capot formant butée de retenue 13 est suffisante pour assurer le maintien des raccords à l'intérieur du bandeau, la saillie principale 7 de chaque raccord 5 étant prise en sandwich entre la traverse supérieure et ladite butée de retenue 13. Avantageusement, la présence de la saillie auxiliaire 10 du raccord 5 qui coopère avec la butée de retenue 11 de la base favorise le maintien du raccord dans le bandeau. Selon cette variante de réalisation, le bandeau peut être formé par un pliage à angle droit, c'est-à-dire à 90° d'une partie de la face de fond de la base, après découpe à la manière d'une languette de ladite partie dudit fond de la base.

A l'état fermé, le capot est solidarisé à la base à l'aide d'une ou plusieurs vis, vissées sur une ou plusieurs parois latérales de ladite base.

La présente invention n'est nullement limitée aux modes de réalisation décrits et représentés, mais l'homme du métier saura y apporter toute variante conforme à son esprit.

## Revendications

1. Boîtier (1) de connexion pour terminaisons de câbles à fibre optique à raccorder à l'aide de raccords (5) réalisés chacun sous forme d'un corps allongé comportant deux parties (6A, 6B) d'extrémité opposées aptes à recevoir chacune une fiche de connexion de terminaison de câble à fibre optique et, disposée entre lesdites parties (6A, 6B) d'extrémité, au moins une saillie (7), dite principale, telle qu'un épaulement, un bourrelet ou un renflement, s'étendant transversalement à la direction longitudinale du raccord (5), ledit boîtier comportant une base (2) fermée au moins partiellement par un capot (3), et, logé entre la base (2) et le capot (3), un cadre (4) rectangulaire appelé bandeau de connexion, reposant, à l'état dressé, par sa traverse inférieure (4B) sur le fond de la base, ledit bandeau (4) délimitant une ouverture (14) pour l'insertion de chacun des raccords (5) jusqu'à une position d'appui de ladite saillie (7) principale du raccord (5) contre la traverse supérieure (4A) dudit bandeau,
**caractérisé en ce que** le capot (3) du boîtier comporte une partie apte à former une butée (13) de retenue de chaque raccord (5), ladite butée (13) de retenue s'étendant, à l'état fermé du boîtier (1), sensiblement parallèlement à la traverse supérieure (4A) du bandeau (4), la butée (13) de retenue et la traverse supérieure (4A) du bandeau (4) délimitant entre elles un logement à l'intérieur duquel est apte à s'insérer la saillie (7) principale de chaque raccord (5), à l'état introduit de chaque raccord (5) dans l'ouverture (14) du bandeau (4), en vue du maintien de chaque raccord (5) dans le bandeau (4).

2. Boîtier (1) de connexion selon la revendication 1, **caractérisé en ce que** ladite butée (13) de retenue est formée par une partie en saillie de la face intérieure (3A) du capot (3).

3. Boîtier selon la revendication 2, **caractérisé en ce que** ladite partie en saillie de la face intérieure (3A) du capot (3) est formée par un bord du capot (3) replié sur lui-même, le capot étant de préférence en métal.

4. Boîtier (1) de connexion selon l'une des revendications 1 à 3, **caractérisé en ce que** le capot (3) comporte également une fente (8), dans laquelle, à l'état fermé du boîtier (1), la traverse supérieure (4A) du bandeau (4) est partiellement engagée, les bords longitudinaux (8A, 8B) opposés de la fente (8) formant des butées de maintien dudit bandeau (4) pour limiter sa déformation lors d'un effort sur ledit bandeau (4) selon la direction transversale au plan d'ouverture (14) dudit bandeau (4).

5. Boîtier (1) de connexion selon la revendication 1, **caractérisé en ce que** le capot (3) comporte une fente dans laquelle est au moins partiellement engagée la traverse supérieure (4A) du bandeau, un bord longitudinal de la fente formant ladite butée (13) de retenue de chaque raccord (5) et l'autre bord longitudinal de la fente formant butée pour la traverse supérieure (4A) du bandeau (4), de manière à permettre une prise en sandwich, entre les deux bords longitudinaux de la fente, de l'ensemble formé par la traverse supérieure (4A) du bandeau (4) et la saillie (7) principale de chaque raccord (5).

6. Boîtier selon l'une des revendications précédentes, du type destiné à loger des raccords (5) de connexion dont chacun des corps (6) allongés comporte en plus de ladite saillie (7) principale, une saillie (10) dite auxiliaire s'étendant transversalement à la direction longitudinale du raccord (5), ledit bandeau (4) délimitant une ouverture (14) pour l'insertion de chacun des raccords (5) jusqu'à une position d'appui à la fois de la saillie (7) principale du raccord (5) contre la traverse supérieure (4A) dudit bandeau et de la saillie (10) auxiliaire contre la traverse inférieure (4B) du bandeau (4),
**caractérisé en ce que** la base (2) comporte une partie apte à former une butée (11) de retenue de chaque raccord (5), ladite butée (11) de retenue s'étendant, à l'état fermé du boîtier (1), sensiblement parallèlement à la traverse inférieure (4B) du bandeau (4), la butée (11) de retenue de la base et la traverse inférieure (4B) du bandeau (4) délimitant entre elles un logement à l'intérieur duquel est apte à s'insérer la saillie (10) auxiliaire de chaque raccord (5), à l'état introduit de chaque raccord (5) dans l'ouverture (14) du bandeau (4), en vue du maintien de chaque raccord (5) dans le bandeau (4).

7. Boîtier selon la revendication 6, **caractérisé en ce que** ladite butée (11) de retenue de la base est formée par une partie (11) en saillie de la face (2A) de la base (2) formant fond du boîtier (1), ladite partie (11) en saillie étant rapportée ou formée d'une pièce avec la base (2).

8. Boîtier selon l'une des revendications précédentes, **caractérisé en ce que** le bandeau (4) est réalisé d'une pièce avec la face de la base (2) formant fond du boîtier (1).

9. Boîtier selon l'une des revendications 1 à 7, **caractérisé en ce que**, le bandeau (4) étant amovible, la base (2) comporte également une fente (9) dans laquelle, à l'état dressé du bandeau, la traverse inférieure (4B) du bandeau (4) est partiellement engagée, les bords (9A, 9B) longitudinaux opposés de la fente (9) formant des butées de maintien dudit bandeau (4) pour limiter sa déformation lors d'un effort sur ledit bandeau (4) selon la direction transversale au plan d'ouverture (14) dudit bandeau (4).

10. Boîtier selon l'une des revendications précédentes, **caractérisé en ce que** l'ouverture (14) du bandeau (4) est formée d'une pluralité de fenêtres distinctes délimitant chacune le logement d'un raccord (5).

## Claims

1. A junction box (1) for terminations of optical fiber cables to be connected by means of connectors (5), each made as an elongated body, including two opposite end portions (6A, 6B), each able to receive an optical fiber cable termination connecting plug and, positioned between said end portions (6A, 6B), at least one so-called main protrusion (7), such as a shoulder, a bead or a bulge, extending transversely to the longitudinal direction of the connector (5), said box including a base (2) at least partly closed by a lid (3), and, housed between the base (2) and the lid (3), a rectangular frame (4) called a connecting strip, resting in the erected condition, with its lower crosspiece (4B) on the bottom of the base, said strip (4), delimiting an opening (14) for inserting each of the connectors (5) as far as a position where said main protrusion (7) of the connector (5) bears against the upper crosspiece (4A) of said strip,
**characterized in that** the lid (3) of the box includes a portion able to form an abutment (13) for retaining each connector (5), said retaining abutment (13), extending, in the closed condition of the box (1), substantially parallel to the upper crosspiece (4A) of the strip (4), the retaining abutment (13) and the upper crosspiece (4A) of the strip (4) delimiting between them a housing inside which the main protrusion (7) of each connector (5) may be inserted, in the condition when each connector (5) has been introduced into the opening (14) of the strip (4), with view to maintaining each connector (5) in the strip (4).

2. The junction box (1) according to claim 1, **characterized in that** said retaining abutment (13) is formed by a protruding portion of the inner face (3A) of the lid (3).

3. The box according to claim 2, **characterized in that** said protruding portion of the inner face (3A) of the lid (3) is formed by an edge of the lid (3) folded on itself, the lid being preferably in metal.

4. The junction box (1) according to any of claims 1 to 3, **characterized in that** the lid (3) also includes a slot (8), into which, in the closed condition of the box (1), the upper crosspiece (4A) of the strip (4) is partly engaged, the opposite longitudinal edges (8A, 8B) of the slot (8) forming abutments for maintaining said strip (4) for limiting its deformation when a force is exerted on said strip (4) along the direction transverse to the opening plane (14) of said strip (4).

5. The junction box (1) according to claim 1, **characterized in that** the lid (3) includes a slot into which the upper crosspiece (4A) of the strip is partly engaged, a longitudinal edge of the slot forming said abutment (13) for retaining each connector (5) and the other longitudinal edge of the slot forming an abutment for the upper crosspiece (4A) of the strip (4), so as to allow the assembly formed by the upper crosspiece (4A) of the strip (4) and the main protrusion (7) of each connector (5) to be sandwiched between both longitudinal edges of the slot.

6. The box according to one of the preceding claims, of the type intended to house connection connectors (5), each of the elongated bodies (6) of which includes, in addition to said main protrusion (7), a so-called auxiliary protrusion (10), extending transversely to the longitudinal direction of the connector (5), said strip (4) delimiting an opening (14) for inserting each of the connectors (5) as far as a position both where the main protrusion (7) of the connector (5) bears against the upper crosspiece (4A) of said strip and where the auxiliary protrusion (10) bears against the lower crosspiece (4B) of the strip (4),
**characterized in that** the base (2) includes a portion able to form an abutment (11) for retaining each connector (5), said retaining abutment (11), extending, in the closed condition of the box (1), substantially parallel to the lower crosspiece (4B) of the strip (4), the retaining abutment (11) of the base and the lower crosspiece (4B) of the strip (4), delimiting between them a housing inside which the auxiliary protrusion (10) of each connector (5) may be inserted, in the condition when each connector (5) has been introduced into the opening (14) of the strip (4), with view to maintaining each connector (5) in the strip (4).

7. The box according to claim 6, **characterized in that** said retaining abutment (11) of the base is formed by a portion (11) protruding from the face (2A) of the base (2) forming the bottom of the box (1), said protruding portion (11) being added or formed as one piece with the base (2).

8. The box according to one of the preceding claims, **characterized in that** the strip (4) is made in one piece with the face of the base (2) forming the bottom of the box (1).

9. The box according to one of claims 1 to 7, **characterized in that**, as the strip (4) is removable, the base (2) also includes a slot (9), into which, in the erected condition of the strip, the lower crosspiece (4B) of the strip (4) is partly engaged, the opposite longitudinal edges (9A, 9B) of the slot (9) forming abutments for maintaining said strip (4) in order to limit its deformation when a force is exerted on said strip (4) along the direction transverse to the opening plane (14) of said strip (4).

10. The box according to one of the preceding claims, **characterized in that** the opening (14) of the strip (4) is formed with a plurality of distinct windows each delimiting the housing of a connector (5).

## Patentansprüche

1. Anschlussdose (1) für Lichtwellenleiterkabelenden, die mit Hilfe von Anschlüssen (5) anzuschließen sind, die jeweils in Form eines länglichen Körpers ausgebildet sind, der zwei gegenüberliegende Endabschnitte (6A, 6B) aufweist, die imstande sind, jeweils einen Anschlussstecker von Lichtwellenleiterkabelenden aufzunehmen, und, angeordnet zwischen den Endabschnitten (6A, 6B), mindestens einen Haupt-Vorsprung (7) wie ein Absatz, eine Wulst oder eine Ausbauchung, der sich quer zur Längsrichtung des Anschlusses (5) erstreckt, wobei die Dose eine Basis (2) aufweist, die mindestens teilweise von einem Deckel (3) verschlossen ist, und, untergebracht zwischen der Basis (2) und dem Deckel (3), einen rechteckigen Rahmen (4), Anschlussstreifen genannt, der im aufgestellten Zustand mit seiner unteren Querstrebe (4B) auf dem Boden der Basis ruht, wobei der Streifen (4) für den Einsatz jedes der Anschlüsse (5) bis zu einer Stützposition des Hauptvorsprungs (7) des Anschlusses (5) auf dem oberen Querträger (4A) des Streifens eine Öffnung (14) begrenzt,
**dadurch gekennzeichnet, dass** der Deckel (3) der Dose einen Abschnitt aufweist, der imstande ist, einen Rückhalteanschlag (13) jedes Anschlusses (5) zu bilden, wobei sich der Rückhalteanschlag (13) im geschlossenen Zustand der Dose (1) etwa parallel zum oberen Querträger (4A) des Streifens(4) erstreckt, wobei der Rückhalteanschlag (13) und der obere Querträger (4A) des Streifens (4) zwischen sich eine Aufnahme begrenzen, in der der Hauptvorsprung (7) jedes Anschlusses (5) im eingeführten Zustand jedes Anschlusses (5) in die Öffnung (14) des Streifens (4) installierbar ist, um jeden Anschluss (5) in dem Streifen (4) zu halten.

2. Anschlussdose (1) nach Anspruch 1, **dadurch gekennzeichnet, dass** der Rückhalteanschlag (13) von einem Abschnitt gebildet wird, der aus der Innenseite (3A) des Deckels (3) hervorsteht.

3. Dose (2) nach Anspruch 2, **dadurch gekennzeichnet, dass** der Abschnitt, der aus der Innenseite (3A) des Deckels (3) hervorsteht, von einem Rand des Deckels (3) gebildet wird, der um sich selbst gefaltet ist, wobei der Deckel vorzugsweise aus Metall ist.

4. Anschlussdose (1) nach einem der Ansprüche 1 bis 3, **dadurch gekennzeichnet, dass** der Deckel (3) ebenfalls einen Schlitz (8) aufweist, in den im geschlossenen Zustand der Dose (1) der obere Querträger (4A) des Streifens (4) teilweise eingreift, wobei die gegenüberliegenden Längsränder (8A, 8B) des Schlitzes (8) Rückhalteanschläge des Streifens (4) bilden, um seine Verformung bei einer Kraft auf den Streifen (4) gemäß der Richtung quer zur Öffnungsebene (14) des Streifens (4) zu begrenzen.

5. Anschlussdose (1) nach Anspruch 1, **dadurch gekennzeichnet, dass** der Deckel (3) einen Schlitz aufweist, in den der obere Querträger (4A) des Streifens mindestens teilweise eingreift, wobei ein Längsrand des Schlitzes den Rückhalteanschlag (13) jedes Anschlusses (5) bildet und der andere Längsrand des Schlitzes für den oberen Querträger (4A) des Streifens (4) derart einen Anschlag bildet, dass zwischen den zwei Längsrändern des Schlitzes eine sandwichförmige Umfassung der Gruppe erlaubt wird, die von dem oberen Querträger (4A) des Streifens (4) und dem Hauptvorsprung (7) jedes Anschlusses (5) gebildet wird.

6. Dose nach einem der vorangehenden Ansprüche der Bauart, die dazu bestimmt ist, Verbindungsanschlüsse (5) aufzunehmen, von denen jeder der länglichen Körper (6) neben dem Hauptvorsprung (7) einen Hilfsvorsprung (10) aufweist, der sich quer zur Längsrichtung des Anschlusses (5) erstreckt, wobei der Streifen (4) eine Öffnung (14) für das Einführen jedes der Anschlüsse (5) bis zu einer Stützposition sowohl des Hauptvorsprungs (7) des Anschlusses (5) gegen den oberen Querträger (4A) des Streifens und des Hilfsvorsprungs (10) gegen den unteren Querträger (4B) des Streifens (4) begrenzt,
**dadurch gekennzeichnet, dass** die Basis (2) einen Abschnitt aufweist, der imstande ist, einen Rückhalteanschlag (11) jedes Anschlusses (5) zu bilden, wobei sich der Rückhalteanschlag (11) im geschlossenen Zustand der Dose (1) etwa parallel zum unteren Querträger (4B) des Streifens (4) erstreckt, wobei der Rückhalteanschlag (11) der Basis und der untere Querträger (4B) des Streifens (4) zwischen sich eine Aufnahme begrenzen, in der der Hilfsvorsprung (10) jedes Anschlusses (5) im eingeführten Zustand jedes Anschlusses (5) in der Öffnung (14) des Streifens (4) installierbar ist, um jeden Anschluss (5) in dem Streifen (4) zu halten.

7. Dose nach Anspruch 6, **dadurch gekennzeichnet, dass** der Rückhalteanschlag (11) der Basis von einem Abschnitt (11) gebildet wird, der aus der Seite (2A) der Basis (2) hervorsteht, die den Boden der Dose (1) bildet, wobei der hervorstehende Abschnitt (11) angesetzt oder mit der Basis (2) aus einem Stück gebildet ist.

8. Dose nach einem der vorangehenden Ansprüche, **dadurch gekennzeichnet, dass** der Streifen (4) mit der Seite der Basis (2), die den Boden der Dose (1) bildet, aus einem Stück hergestellt ist.

9. Dose nach einem der Ansprüche 1 bis 7, **dadurch gekennzeichnet, dass**, wobei der Streifen (4) entfernbar ist, die Basis (2) ebenfalls einen Schlitz (9) aufweist, in den im aufgerichteten Zustand des Streifens der untere Querträger (4B) des Streifens (4) teilweise eingreift, wobei die dem Schlitz (9) gegenüberliegenden Längsränder (9A, 9B) Rückhalteanschläge des Streifens (4) bilden, um seine Verformung bei einer Kraft auf den Streifen (4) gemäß der Richtung quer zur Öffnungsebene (14) des Streifens (4) zu begrenzen.

10. Dose nach einem der vorangehenden Ansprüche, **dadurch gekennzeichnet, dass** die Öffnung (14) des Streifens (4) aus einer Vielzahl unterschiedlicher Fenster gebildet ist, die jeweils die Aufnahme eines Anschlusses (5) begrenzen.
